Europäisches Patentamt

European Patent Office

Office européen des brevets

(19)

(11) **EP 1 087 476 A1**

(12) **EUROPÄISCHE PATENTANMELDUNG**

(43) Veröffentlichungstag:
  **28.03.2001  Patentblatt 2001/13**

(51) Int Cl.⁷: **H01S 3/0975**, H01S 3/041

(21) Anmeldenummer: **99114798.4**

(22) Anmeldetag: **28.07.1999**

(84) Benannte Vertragsstaaten:
  **AT BE CH CY DE DK ES FI FR GB GR IE IT LI LU MC NL PT SE**
  Benannte Erstreckungsstaaten:
  **AL LT LV MK RO SI**

(71) Anmelder: **TRUMPF LASERTECHNIK GmbH D-71254 Ditzingen (DE)**

(72) Erfinder:
  • **von Borstel, Michael Dr.**
    **74385 Pleidelsheim (DE)**

  • **Schlüter, Holger Dr.**
    **70197 Stuttgart (DE)**
  • **Viöl, Wolfgang Prof. Dr.**
    **37139 Adelebsen (DE)**

(74) Vertreter: **KOHLER SCHMID + PARTNER Patentanwälte Ruppmannstrasse 27 70565 Stuttgart (DE)**

(54) **Frequenzangeregter Gaslaser für die Materialbearbeitung**

(57)     An einem frequenzangeregten Gaslaser (1) für die Materialbearbeitung liegt ein im wesentlichen außengekühlter Entladungsraum (7) zwischen zwei Anregungselektroden zur Energieeinkoppelung in Form zylindrischer Elektrodenrohre (2, 3), die mit einer Quelle (23) für elektrische Anregungsenergie über Halbleiterschaltelemente (22) zur Erzeugung der Anregungsfrequenz in Verbindung stehen und von denen wenigstens eines an seiner dem Entladungsraum (7) zugewandten Seite ein Dielektrikum (5, 6) aufweist.

**Fig. 1**

EP 1 087 476 A1

**Beschreibung**

Die Erfindung betrifft einen frequenzangeregten Gaslaser für die Materialbearbeitung.

Für derartige Gaslaser sind in einem begrenzten Bereich der Anregungsfrequenz zu deren Erzeugung kostengünstige Halbleiterschaltelemente verfügbar. Einen entsprechenden Frequenzgenerator offenbart EP-B-0 287 677 für den Frequenzbereich von 1 MHz bis 10 MHz. Mit abnehmender Anregungsfrequenz wächst die Dicke einer Randschicht, die sich während des Laserbetriebs an der Wandung des Entladungsraumes bzw. an der dem Entladungsraum zugewandten Seite der Anregungselektroden bildet und innerhalb derer eine Verarmung an Elektronen auftritt. Aufgrund des Elektronenmangels kann die genannte Randschicht allenfalls einen geringen Beitrag zur Anregung des Lasergases leisten. Mit zunehmender Randschichtdicke vermindert sich bei gegebenem Entladungsraumquerschnitt die Wirksamkeit der Lasergasanregung. Beschrieben ist das Phänomen der Randschichtbildung beispielsweise in DE-A-43 03 158. In der noch unveröffentlichten deutschen Patentanmeldung mit dem amtlichen Aktenzeichen 198 02 319.7 des Herrn Prof. Dr. Wolfgang Viöl ist angegeben, daß sich die mittlere Randschichtdicke $d_m$ nach der Gleichung $d_m = v_d/2\pi f$ bestimmen läßt, wobei $v_d$ die mittlere Driftgeschwindigkeit der Elektronen bei der Lasergasentladung und f die Anregungsfrequenz ist. Ausweislich der zitierten unveröffentlichten Patentanmeldung beträgt die mittlere Driftgeschwindigkeit $v_d$ der Elektronen bei einer $Co_2$-Lasergas-Entladung rund $10^5$ m/s.

Angesichts der vorstehenden Zusammenhänge werden bislang kostengünstige Halbleiterschaltelemente zur Erzeugung der Anregungsfrequenz ausschließlich für Gaslaser mit verhältnismäßig weit voneinander beabstandeten Anregungselektroden verwendet. Der Abstand der Anregungselektroden wird nämlich so bemessen, daß ungeachtet der zu erwartenden elektronenarmen Randschichten ein hinreichend großer anregungsaktiver Entladungsraumquerschnitt zur Verfügung steht.

Bedingt durch den großen Abstand der Anregungselektroden gestaltet sich die Kühlung des sich während des Laserbetriebes erhitzenden Lasergases insofern aufwendig, als für eine ständige Zirkulation des Lasergases gesorgt werden muß, im Laufe derer das Lasergas über außerhalb des Entladungsraumes angeordnete Kühleinrichtungen geleitet wird, ehe es nach seiner Kühlung dem Entladungsraum erneut zugeführt werden kann. Diese "Innenkühlung" des Entladungsraumes aber erfordert einen verhältnismäßig großen technischen und wirtschaftlichen Aufwand. Eine "Außenkühlung" des Entladungsraumes über die Anregungselektroden oder über in Richtung der Anregungselektroden liegende Teile der Entladungsraumwandung kann aufgrund des großen Elektrodenabstandes nur wenig zu der Lasergaskühlung insgesamt beitragen.

Bekannt ist ein frequenzangeregter Gaslaser mit im wesentlichen innengekühltem Entladungsraum aus US-A-4,329,662. Dabei ist eine der Anregungselektroden mit einem Dielektrikum versehen, das - wie bislang üblich - im wesentlichen zur Vermeidung eines Kurzschlusses zwischen den Anregungselektroden dient.

Die vorliegende Erfindung, verkörpert durch die Merkmalskombination gemäß Anspruch 1, beruht nun auf der überraschenden Erkenntnis, daß die vorstehend beschriebene Randschichtbildung bei Anregungsfrequenzen, welche den Einsatz kostengünstiger Halbleiterschaltelemente zur Frequenzerzeugung erlauben, zumindest weitgehend vermieden wird, sofern wenigstens eine der Anregungselektroden an ihrer dem Entladungsraum zugewandten Seite ein Dielektrikum aufweist. Die Vermeidung der Bildung einer nennenswerten Randschicht wiederum eröffnet die Möglichkeit, die Anregungselektroden erfindungsgemäßer Gaslaser ungeachtet der vorhandenen Anregungsfrequenz mit geringem Abstand voneinander anzuordnen. Dann aber können die Anregungselektroden bzw. in Richtung auf diese angeordnete Begrenzungen des Entladungsraumes in wesentlichem Umfange zur Außenkühlung des Entladungsraumes genutzt werden. Erfindungsgemäß erübrigen sich folglich aufwendige Maßnahmen zur Innenkühlung des Entladungsraumes. Ebenfalls der Vermeidung technischen und wirtschaftlichen Aufwandes dient das erfindungsgemäße Merkmal, wonach die Anregungselektroden zur Energieeinkoppelung als zylindrische Elektrodenrohre ausgebildet sind. Derart gestaltete Anregungselektroden besitzen etwa eine Eigensteifigkeit, aufgrund derer ansonsten erforderliche Versteifungsmaßnahmen verzichtbar sind. Wie nachstehend noch dargelegt werden wird, sind die erfindungsgemäßen Elektrodenrohre überdies in der Lage, eine Mehrzahl von Funktionen zu übernehmen.

Vorteilhafte Ausführungsarten der in Anspruch 1 beschriebenen Erfindung ergeben sich aus den abhängigen Ansprüchen 2 bis 21.

Gemäß Anspruch 3 beträgt der freie Abstand d der erfindungsgemäßen Elektrodenrohre bevorzugtermaßen maximal 15 mm. Insbesondere beträgt d höchstens 10 mm. Der freie Abstand d wird von dem Dielektrikum des einen zu dem Dielektrikum des anderen Elektrodenrohres bzw. von dem Dielektrikum des einen Elektrodenrohres zu dem anderen Elektrodenrohr gemessen. Gemäß Anspruch 4 ist die Anregungsfrequenz in vorteilhafter Weiterbildung der Erfindung kleiner als 3 MHz bei einer Laserausgangsleistung von 500 W bis 20 kW. Bevorzugtermaßen liegt die Anregungsfrequenz bei maximal 1 MHz.

Zur Außenkühlung des Entladungsraumes erfindungsgemäßer Gaslaser bieten sich mehrere Möglichkeiten. Erfindungsgemäß bevorzugt werden die in den Ansprüchen 6 bis 9 genannten Maßnahmen zur Außenkühlung des Entladungsraumes mittels wenigstens eines der Elektrodenrohre. Ergänzend oder alternativ ist es beispielsweise möglich, das oder die Dielektrika an eine Kühlmittelquelle anzuschließen. Unter dem Gesichtspunkt der konstruktiv einfachen Entladungsraum-Außenkühlung empfiehlt sich insbesondere die in Anspruch 8 beschriebene Gaslaserbauart. In diesem Fall kann das gewendelte Rohr, welches das betreffende Elektrodenrohr bildet, ohne weiteres als Kühlleitung dienen.

Im Falle erfindungsgemäßer Gaslaser, an denen eines der Elektrodenrohre mit einer Quelle für Kühlmittel in Verbindung steht, sind im Interesse einer guten Wärmeübertragung aus dem Entladungsrauminnern zu dem oder den betreffenden Elektrodenrohren die kennzeichnenden Merkmale der Ansprüche 11 und 12 vorgesehen. Bildet das Dielektrikum eine Oberflächenstruktur des betreffenden Elektrodenrohres, wie dies in Anspruch 12 beschrieben wird, so ist der direkte Kontakt zwischen Dielektrikum und Elektrodenrohr ohne weiteres hergestellt.

Ebenfalls einer wirksamen Wärmeabfuhr aus dem Entladungsrauminnern dienen die Merkmale der Ansprüche 13 bis 15. Ein Dielektrikum aus Diamant gemäß Anspruch 15 vereint eine außerordentlich hohe Wärmeleitfähigkeit mit hervorragenden dielektrischen, d.h. isolierenden Eigenschaften.

Im Interesse der Vermeidung konstruktiven und wirtschaftlichen Aufwandes ist auch die Verwendung eines gemeinsamen Spiegelträgers für die Resonatorspiegelanordnungen der in Anspruch 18 beschriebenen erfindungsgemäßen Gaslaserbauart. Auch die Funktion des gemeinsamen Spiegelträgers können in Weiterbildung der Erfindung gemäß Anspruch 19 die Elektrodenrohre übernehmen. Weitere, dem oder den Elektrodenrohren erfindungsgemäß zugedachte Funktionen ergeben sich aus den Ansprüchen 20 und 21. Die Gaslaserbauart nach Anspruch 21 zeichnet sich dabei durch eine ohne weiteres gegebene Berührungssicherheit des äußeren Elektrodenrohres aus.

Nachstehend wird die Erfindung anhand schematischer Darstellungen zu Ausführungsbeispielen näher erläutert. Es zeigen:

Fign. 1 und 2     Schnittdarstellungen zu einer ersten Bauart eines frequenzangeregten Gaslasers,

Fign. 3 und 4     Teildarstellungen zu einer zweiten sowie einer dritten Bauart eines frequenzangeregten Gaslasers,

Fig. 5     den Gaslaser nach Fig. 3 in einer schematisch vervollständigten Seitenansicht und

Fign. 6 und 7     Teildarstellungen zu einer vierten sowie einer fünften Bauart eines frequenzangeregten Gaslasers.

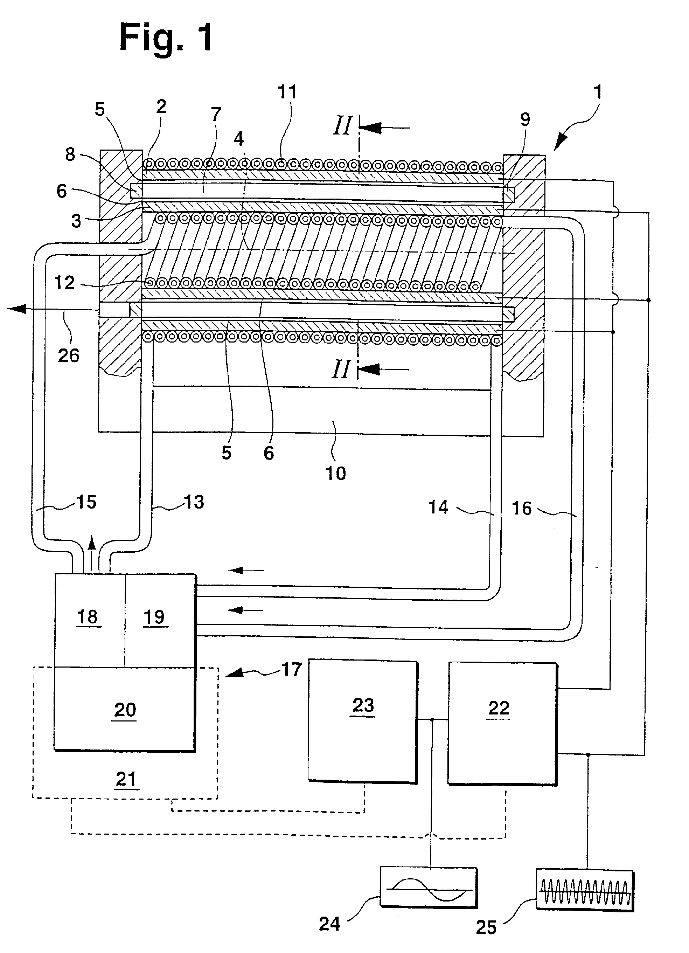

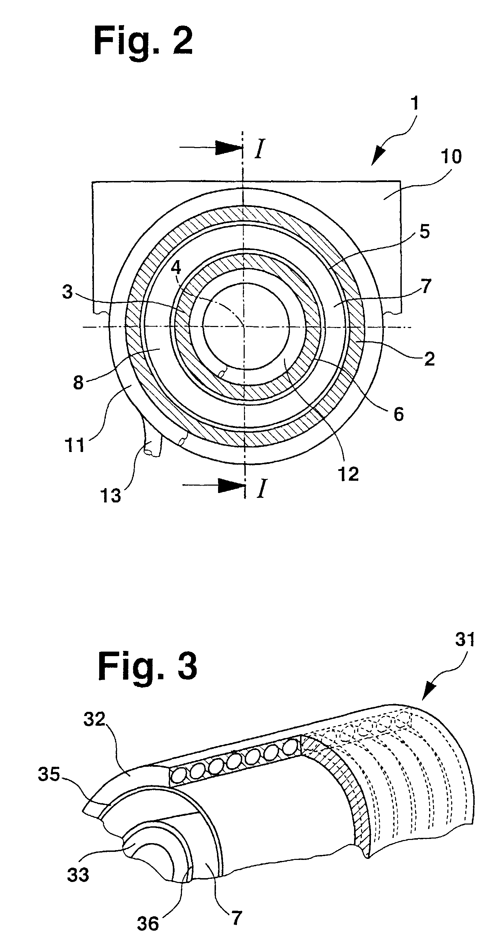

Gemäß den Fign. 1 und 2 umfaßt ein Gaslaser 1 Anregungselektroden in Form koaxialer Elektrodenrohre 2, 3. Einer gemeinsamen Achse der Elektrodenrohre 2, 3 ist das Bezugszeichen 4 zugeordnet. Der Verlauf der Darstellungsebene von Fig. 1 ist in Fig. 2 durch die Linie I-I, der Verlauf der Darstellungsebene von Fig. 2 in Fig. 1 durch die Linie II-II angedeutet. An ihren einander zugewandten Mantelflächen weisen die Elektrodenrohre 2, 3 Dielektrika 5, 6, jeweils in Form dünnwandiger Rohre aus $Al_2O_3$ auf. Dabei befinden sich die Dielektrika 5, 6 in direktem Kontakt mit dem jeweils zugehörigen Elektrodenrohr 2, 3. Zwischen den Dielektrika 5, 6 bzw. den Elektrodenrohren 2, 3 liegt ein Entladungsraum 7, der einen kreisringförmigen Querschnitt aufweist und als laseraktives Medium $CO_2$ enthält.

An dem Entladungsraum 7 liegen sich in dessen axialer Richtung Resonatorspiegelanordnungen 8, 9 gegenüber. Letztere sind an einem gemeinsamen Spiegelträger 10 angebracht. Die Resonatorspiegelanordnungen 8, 9 sind kreisringförmig gestaltet und weisen eine Stelle zur Auskoppelung eines Laserstrahls 26 auf.

An ihren von dem Entladungsraum 7 abgewandten Seiten tragen die Elektrodenrohre 2, 3 jeweils eine schraubenförmig verlaufende Kühlleitung 11, 12. Die Kühlleitung 11 ist dabei mit einer Zufuhrleitung 13 und einer Rücklaufleitung 14, die Kühlleitung 12 mit einer Zufuhrleitung 15 und einer Rücklaufleitung 16 an eine Quelle für Kühlmittel in Form einer Kühleinrichtung 17 angeschlossen. Als Kühlmittel dient Wasser, das mittels einer herkömmlichen Umwälzpumpe 18 über die Zufuhrleitungen 13, 15 den Kühlleitungen 11, 12 zu- und über die Rücklaufleitungen 14, 16 aus den Kühlleitungen 11, 12 abgeführt wird. Neben der genannten Umwälzpumpe 18 umfaßt die Kühleinrichtung 17 einen Wärmetauscher 19 ebenfalls herkömmlicher Bauart, über welchen das nach dem Passieren der Elektrodenrohre 2, 3 erhitzte Wasser geleitet wird. Die Kühlleistung der Kühleinrichtung 17 wird mittels einer Kühlanlagensteuerung 20 rechnergesteuert eingestellt. Dabei gilt für die Kühlleistung $P_c$:

$$\frac{P_c \times d}{A} > \frac{1\,W}{cm}\,,$$

wobei A die zur Kühlung des Entladungsraumes 7 genutzte Fläche der Elektrodenrohre 2, 3 und d der freie Abstand zwischen den Elektrodenrohren 2, 3, d.h. der Abstand zwischen den Dielektrika 5, 6, ist.

Die Kühlanlagensteuerung 20 ist ihrerseits Bestandteil einer Rechnersteuerung 21 der mit dem Gaslaser 1 versehenen Bearbeitungsmaschine, vorliegend einer Laserschneidmaschine zum Bearbeiten von Blechen.

Zur Frequenzanregung des den Entladungsraum 7 füllenden Lasergases sind die Elektrodenrohre 2, 3 über Halbleiterschaltelemente 22 auf eine Quelle 23 für elektrische Anregungsenergie geschaltet. Das äußere Elektrodenrohr 2 ist dabei mit Masse verbunden. Bei den Halbleiterschaltelementen 22 handelt es sich um gebräuchliche, kostengünstige Bauteile. Ihre Funktion ist mittels Frequenzbildern 24, 25 veranschaulicht. Auch die Halbleiterschaltelemente 22 und die Energiequelle 23 stehen mit der Rechnersteuerung 21 in Verbindung.

Im dargestellten Beispielsfall wird mittels der Halbleiterschaltelemente 22 eine Anregungsfrequenz von 1 MHz bei einer Laserleistung von 10 kW erzeugt. Die Elektrodenrohre 2, 3 weisen einen freien Abstand von 6,5 mm auf. Die über die Elektrodenrohre 2, 3 eingekoppelte Energie bewirkt in bekannter Weise die Anregung des in dem Entladungsraum 7 anstehenden Lasergases und damit die Erzeugung des Laserstrahls 26, der in ebenfalls üblicher Weise aus dem Entladungsraum 7 ausgekoppelt und an die Bearbeitungsstelle der mit dem Gaslaser 1 ausgestatteten Bearbeitungsmaschine geleitet wird.

Der Entladungsraum 7 wird während des Betriebes des Gaslasers 1 über die Elektrodenrohre 2, 3 und die dicht daran anliegenden Dielektrika 5, 6 außengekühlt. Aufgrund des direkten Kontaktes der Dielektrika 5, 6 mit den zugehörigen Elektroden 2, 3 und aufgrund der guten Wärmeleitfähigkeit der Dielektrika 5, 6 ist dabei ein guter Wärmeübergang von dem erhitzten Lasergas im Innern des Entladungsraumes 7 auf das in den Kühlleitungen 11, 12 geführte Kühlwasser gewährleistet. Maßnahmen zur Innnenkühlung des Entladungsraumes 7 durch Austausch von erhitztem gegen gekühltes Lasergas sind nicht vorgesehen. In geringem Umfang ist eine derartige Innenkühlung des Entladungsraumes 7 denkbar. In jedem Fall aber werden über die Außenkühlung des Entladungsraumes 7 wenigstens 70 Prozent der dem Entladungsraum 7 zu entziehenden Wärme abgeführt. Denkbar ist auch eine Zirkulation des Lasergases mit dem Ziel, während des Laserprozesses zersetzte Gasanteile außerhalb des Entladungsraumes 7 beispielsweise unter Einsatz von Katalysatoren zu regenerieren. Ungeachtet des in Kombination mit einer verhältnismäßig niedrigen Anregungsfrequenz bestehenden relativ geringen Abstandes der Elektrodenrohre 2, 3 ist der Gaslaser 1 hinreichend leistungsfähig.

Ausweislich Figur 3 besitzt ein Gaslaser 31 ein äußeres Elektrodenrohr 32, welches abweichend von dem Elektrodenrohr 2 gemäß den Figuren 1 und 2 von Kühlwasser durchströmt ist. Die zu diesem Zweck vorgesehene Kühlwasserleitung durchsetzt das Elektrodenrohr 32 schraubenförmig. Dem äußeren Elektrodenrohr 32 entsprechend gestaltet ist ein inneres Elektrodenrohr 33 des Gaslasers 31. In Figur 3 ebenfalls erkennbar sind Dielektrika 35, 36 in Form dünnwandiger Rohre aus $Al_2O_3$, welche sich in direktem Kontakt mit den Elektrodenrohren 32, 33 befinden.

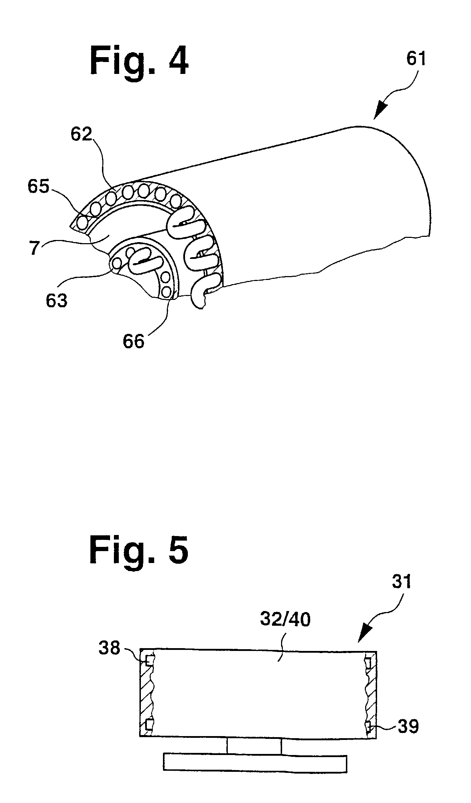

Ebenfalls von Kühlwasser durchströmt sind Elektrodenrohre 62, 63 eines in Figur 4 ausschnittweise gezeigten C0-Gaslasers 61. In diesem Fall verlaufen die Kühlwasserleitungen im Innern der Elektrodenrohre 62, 63 allerdings mäanderartig, wobei einzelne geradlinige Leitungsabschnitte über Kühlrohrumlenkungen 67 miteinander verbunden sind. Dielektrika 65, 66 sind ebenfalls als dünnwandige Rohre aus $Al_2O_3$ ausgebildet und liegen an dem jeweils zugehörigen Elektrodenrohr 62, 63 dicht an.

Ausweislich Figur 5 dient das äußere Elektrodenrohr 32 des Gaslasers 31 auch als gemeinsamer Spiegelträger 40 für Resonatorspiegelanordnungen 38, 39. Neben dieser Funktion und seiner originären Funktion als Anregungselektrode übernimmt das äußere Elektrodenrohr 32 die Funktionen einer Kühlmittelführung, einer dichten Begrenzung des unter einem Unterdruck stehenden zugehörigen Entladungsraumes sowie des Masseträgers.

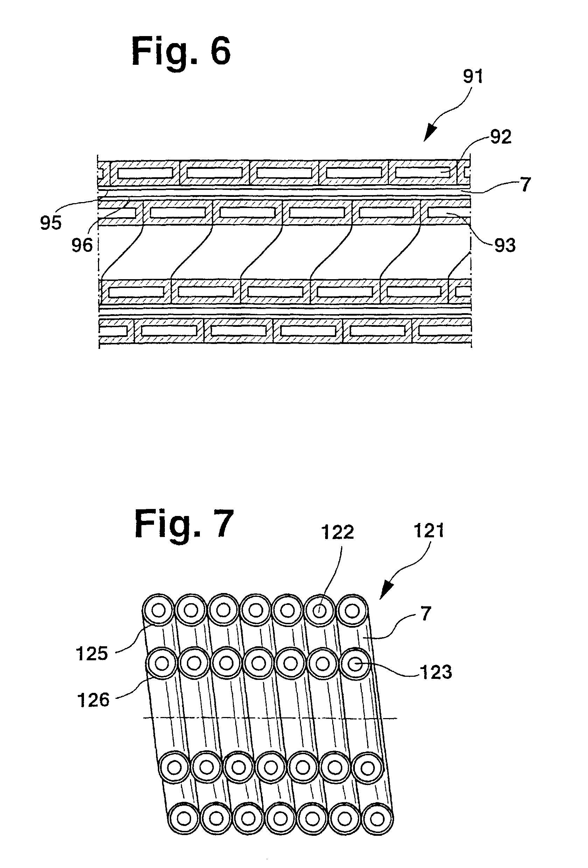

Elektrodenrohre 92, 93; 122, 123 von Gaslasern 91, 121 sind gemäß den Figuren 6 und 7 von gewendelten Rohren gebildet. Dabei besitzen die gewendelten Rohre der Elektrodenrohre 92, 93 einen Rechteckquerschnitt. Infolgedessen ergeben sich an den einander zugewandten Seiten der Elektrodenrohre 92, 93 ebene Flächen, die ohne weiteres großflächig in direkten Kontakt mit Dielektrika 95, 96 in Form dünnwandiger Rohre aus $Al_2O_3$ gebracht werden können.

Die gewendelten Rohre der Elektrodenrohre 122, 123 weisen hingegen eine äußerst dünne, in Figur 7 stark vergrößert dargestellte Beschichtung aus Diamant auf. Die Diamantbeschichtungen bilden Oberflächenstrukturen der Elektrodenrohre 122, 123 und befinden sich als solche mit letzteren in direktem Kontakt. Sie dienen als Dielektrika 125, 126.

Sowohl die gewendelten Rohre der Elektrodenrohre 92, 93 als auch die gewendelten Rohre der Elektrodenrohre 122, 123 können unmittelbar als Kühlwasserleitungen genutzt werden.

Abgesehen von den aufgezeigten Unterschieden stimmen die vorstehend beschriebenen Gaslaserbauarten in Aufbau und Funktionsweise miteinander überein.

**Patentansprüche**

1.  Frequenzangeregter Gaslaser für die Materialbearbeitung mit einem im wesentlichen außengekühlten Entladungsraum (7) zwischen zwei Anregungselektroden zur Energieeinkoppelung in Form zylindrischer Elektrodenrohre (2, 3; 32, 33; 62, 63; 92, 93; 122, 123), die mit einer Quelle (23) für elektrische Anregungsenergie über Halbleiterschaltelemente (22) zur Erzeugung der Anregungsfrequenz in Verbindung stehen und von denen wenigstens eines an seiner dem Entladungsraum (7) zugewandten Seite ein Dielektrikum (5, 6; 35, 36; 65, 66; 95, 96; 125, 126) aufweist.

2.  Gaslaser nach Anspruch 1, dadurch gekennzeichnet, daß der Entladungsraum (7) als laseraktives Medium $CO_2$ oder $CO$ enthält.

3. Gaslaser nach einem der vorhergehenden Ansprüche, dadurch gekennzeichnet, daß der freie Abstand d der Elektrodenrohre (2, 3; 32, 33; 62, 63; 92, 93; 122, 123) maximal 15 mm beträgt.

4. Gaslaser nach einem der vorhergehenden Ansprüche, dadurch gekennzeichnet, daß die Anregungsfrequenz kleiner als 3 MHz ist bei einer Laserausgangsleistung von 500 W bis 20 kW.

5. Gaslaser nach einem der vorhergehenden Ansprüche, dadurch gekennzeichnet, daß die Elektrodenrohre (2, 3; 32, 33, 62, 63; 92, 93; 122, 123) koaxial angeordnet sind.

6. Gaslaser nach einem der vorhergehenden Ansprüche, dadurch gekennzeichnet, daß zur Außenkühlung des Entladungsraumes (7) wenigstens eines der Elektrodenrohre (2, 3; 32, 33; 62, 63; 92, 93; 122, 123) mit einer Quelle (17) für Kühlmittel in Verbindung steht.

7. Gaslaser nach einem der vorhergehenden Ansprüche, dadurch gekennzeichnet, daß wenigstens eines der Elektrodenrohre (32, 33; 62, 63; 92, 93; 122, 123) von einem Kühlmittel durchströmt ist.

8. Gaslaser nach einem der vorhergehenden Ansprüche, dadurch gekennzeichnet, daß wenigstens eines der Elektrodenrohre (92, 93; 122, 123) von einem gewendelten Rohr gebildet ist.

9. Gaslaser nach einem der vorhergehenden Ansprüche, dadurch gekennzeichnet, daß wenigstens eines der Elektrodenrohre (2, 3) an seiner von dem Entladungsraum (7) abgewandten Seite zumindest eine kühlmittelführende Kühlleitung (11, 12) trägt.

10. Gaslaser nach einem der vorhergehenden Ansprüche, dadurch gekennzeichnet, daß Kühlmittel in Form von Kühlflüssigkeit vorgesehen ist.

11. Gaslaser nach einem der vorhergehenden Ansprüche, dadurch gekennzeichnet, daß sich wenigstens eines der Elektrodenrohre (2, 3; 32, 33; 62, 63; 92, 93; 122, 123) mit einem Dielektrikum (5, 6; 35, 36; 65, 66; 95, 96; 125, 126) in direktem Kontakt befindet.

12. Gaslaser nach einem der vorhergehenden Ansprüche, dadurch gekennzeichnet, daß wenigstens eines der Elektrodenrohre (122, 123) an seiner dem Entladungsraum (7) zugewandten Seite eine von einem Dielektrikum (125, 126) gebildete Oberflächenstruktur aufweist.

13. Gaslaser nach einem der vorhergehenden Ansprüche, dadurch gekennzeichnet, daß wenigstens ein Dielektrikum (5, 6; 35, 36; 65, 66; 95, 96; 125, 126) einen hohen Wärmeleitwert besitzt.

14. Gaslaser nach einem der vorhergehenden Ansprüche, dadurch gekennzeichnet, daß wenigstens ein Dielektrikum (5, 6; 35, 36; 65, 66; 95, 96) aus $Al_2O_3$ besteht.

15. Gaslaser nach einem der vorhergehenden Ansprüche, dadurch gekennzeichnet, daß wenigstens ein Dielektrikum (125, 126) aus Diamant besteht.

16. Gaslaser nach einem der vorhergehenden Ansprüche, dadurch gekennzeichnet, daß für die Kühlleistung $P_c$ der Elektrodenrohrkühlung gilt:

$$\frac{P_c \times d}{A} > \frac{1\ W}{cm} \ ,$$

wobei A die zur Kühlung des Entladungsraumes genutzte Fläche der Elektrodenrohre (2, 3; 32, 33; 62, 63; 92, 93; 122, 123) und d der freie Abstand zwischen den Elektrodenrohren (2, 3; 32, 33; 62, 63; 92, 93; 122, 123) ist.

17. Gaslaser nach einem der vorhergehenden Ansprüche, dadurch gekennzeichnet, daß wenigstens eines der Elektrodenrohre (2, 3; 32, 33; 62, 63; 92, 93; 122, 123) an seiner dem Entladungsraum (7) zugewandten Seite ein Dielektrikum (5, 6; 35, 36; 65, 66; 95, 96) in Form eines dünnwandigen Rohres aufweist.

18. Gaslaser nach einem der vorhergehenden Ansprüche mit an dem Entladungsraum (7) einander gegenüberliegenden Resonatorspiegelanordnungen (8, 9; 38, 39), dadurch gekennzeichnet, daß die Resonatorspiegelanordnungen (8, 9; 38, 39) an einem gemeinsamen Spiegelträger (10, 40) gehalten sind.

19. Gaslaser nach einem der vorhergehenden Ansprüche, dadurch gekennzeichnet, daß wenigstens eines (32) der Elektrodenrohre (32, 33) den gemeinsamen Spiegelträger (40) für die Resonatorspiegelanordnungen (38, 39) ausbildet.

20. Gaslaser nach einem der vorhergehenden Ansprüche, dadurch gekennzeichnet, daß wenigstens eines der Elektrodenrohre (2, 3; 32, 33; 62, 63; 92, 93; 122, 123) und/oder gegebenenfalls das diesem zugeordnete Dielektrikum (5, 6; 35, 36; 65, 66; 95, 96; 125, 126) eine dichte Begrenzung des Entladungsraumes (7) bildet.

21. Gaslaser nach einem der vorhergehenden Ansprüche, dadurch gekennzeichnet, daß das radial äußere Elektrodenrohr (2, 32, 62, 92, 122) mit Masse verbunden ist.

# Fig. 1

# Fig. 2

# Fig. 3

# Fig. 4

# Fig. 5

# Fig. 6

# Fig. 7

**Europäisches**
**Patentamt**

**EUROPÄISCHER RECHERCHENBERICHT**

Nummer der Anmeldung

EP 99 11 4798

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| D,Y | EP 0 287 677 A (FANUC) 26. Oktober 1988 (1988-10-26) <br><br> * Zusammenfassung; Abbildung 1 * <br> --- | 1-7, 9-14, 17-20 | H01S3/0975 H01S3/041 |
| Y | EHRLICHMANN D ET AL: "DIFFUSION-COOLED CO2 LASER WITH COAXIAL HIGH FREQUENCY EXCITATION AND INTERNAL AXICON" JOURNAL OF PHYSICS D. APPLIED PHYSICS,GB,IOP PUBLISHING, BRISTOL, Bd. 26, Nr. 2, Seite 183-191 XP000335356 ISSN: 0022-3727 * Seite 183; Abbildungen 1-5 * <br> --- | 1-3,5-7, 9-14, 17-20 | |
| Y | M.W.SASNETT: "KILOWATT-CLASS CO2 LASERS MEET PRESENT AND FUTURE INDUSTRIAL NEEDS" LASER FOCUS., Bd. 24, Nr. 3, März 1988 (1988-03), Seiten 48-67, XP002123703 PENNWELL PUBLISHING CO. TULSA., US * Seite 48 * <br> --- | 4 | RECHERCHIERTE SACHGEBIETE (Int.Cl.7) |
| Y | EP 0 610 170 A (D.SCHUÖCKER) 10. August 1994 (1994-08-10) <br><br> * Zusammenfassung; Ansprüche 1-8; Abbildungen 1,2 * <br> ----- | 1,2, 11-13, 17,20 | H01S |

Der vorliegende Recherchenbericht wurde für alle Patentansprüche erstellt

| Recherchenort | Abschlußdatum der Recherche | Prüfer |
|---|---|---|
| DEN HAAG | 24. November 1999 | Malic, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 4798

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-11-1999

| Im Recherchenbericht angeführtes Patentdokument | Datum der Veröffentlichung | Mitglied(er) der Patentfamilie | Datum der Veröffentlichung |
|---|---|---|---|
| EP 0287677 A | 26-10-1988 | JP 6082875 B | 19-10-1994 |
| | | JP 63098171 A | 28-04-1988 |
| | | DE 3781404 A | 01-10-1992 |
| | | WO 8802938 A | 21-04-1988 |
| | | US 4837789 A | 06-06-1989 |
| EP 0610170 A | 10-08-1994 | AT 154857 T | 15-07-1997 |
| | | DE 59403206 D | 31-07-1997 |

EPO FORM P0461

Für nähere Einzelheiten zu diesem Anhang : siehe Amtsblatt des Europäischen Patentamts, Nr. 12/82